# EUROPEAN PATENT APPLICATION

(11) **EP 2 075 236 A1**
(43) Date of publication of application: **01.07.2009**
(21) Application number: 07123525.3
(22) Date of filing: 18.12.2007
(51) Int. Cl.: C03C 1/02

(54) **Protecting granules**

(71) Applicant: AGC Flat Glass Europe SA, 1170 Bruxelles (BE)
(72) Inventor: Collart, Olivier, 6040 Jumet (BE); Carleer, Pierre, 6040 Jumet (BE); Chiliatte, Benoît, 6040 Jumet (BE)
(74) Representative: Decamps, Alain René François

(57) **Abstract**

Agglomerated granules comprising a simple homogeneous mixture of a volatilizable substance to be protected and a matrix which is able to form an eutectic with at least one of the constituents of a batch of molten raw materials for the manufacture of glass.

## Description

This invention relates to agglomerated granules enclosing a volatilizable substance to be protected. In particular, the invention relates to agglomerated granules that can be incorporated in a batch mixture of components suitable for glass manufacturing processes.

In classical soda lime glass compositions, batch materials like sand, soda ash, limestone, dolomite, and different additives, like colouring, oxidizing or reducing agents, are subjected to very high temperatures to allow melting to occur. During this melting as well as the further processing, some ingredients of the batch materials could partially volatilize and escape through the furnace exhaust system and are thus lost from the glass melt. This volatilization phenomenon leads to an increased cost to manufacture the product as well as to collect the resulting exhaust gas if regulations prohibit their free disposal in the atmosphere. It is therefore very desirable to improve the retention of the volatilizable compounds in the glass melt and therefore, in the glass product.

With volatilizable compound, it is meant a substance which volatilizes as such or which could transform into a volatile material.

Known volatilizable compounds that could be added to a glass batch in order to provide various properties to the final glass product are elements from group Va like arsenic or antimony, and their respective compounds, as well as elements from group VIa like sulphur, selenium or tellurium, and their respective compounds.

Among them, one highly volatilizable ingredient commonly employed in some glass compositions is selenium, which acts as a colouring agent. When selenium is added to the batch as metallic selenium, about 85-90% of the added selenium is vaporized out of the batch. The volatilization phenomenon is slightly decreased when using Na₂SeO₃. In that case, about 75-85% of the selenium added is lost from the glass melt.

Another substance which is commonly added to the batch material and leads to volatilization is coke. Coke added to the glass composition mainly helps to modulate the redox ratio of the final glass. Unfortunately, coke transforms readily at high temperatures, when reacting with oxygen, into gaseous carbon oxides and thus is easily lost from the glass melt. The same phenomenon would occur with other carbonaceous materials like graphite, charcoal or carbon black.

A way to increase the retention of such volatilizable compounds is to delay as much as possible the exposure of the said volatilizable compounds to the high temperatures of the glass melting process. Such a way is described in W02007/045654A1, in particular for the increasing of selenium retention in the manufacture of glass, by encapsulating a selenium compound within a pressed encapsulated pellet. The said pellet comprises a hollow cavity filled with a compound of selenium surrounded by a matrix material.

The present invention allows overcoming the volatilization problems discussed above by using, as the source of a volatilizable substance to be protected from the glass melt, agglomerated granules enclosing the said volatilizable substance. This substance to be protected can be selenium, sulphur, tellurium, arsenic, antimony and/or a carbonaceous material. In comparison with the disclosure of W02007/045654A1, the inventors have unexpectedly found that replacing the encapsulation method described above by a simple mixing of the said volatilizable substance to be protected with a matrix into an agglomerated granule leads to an improved retention of the said volatilizable substance during the melting process.

An additional advantage of the invention is the faster and cheaper way to prepare the agglomerated granules in comparison with the pressed encapsulated pellets.

According to a first aspect, the invention provides granules as defined in Claim 1.

According to a second aspect, the invention provides a process for the manufacture of granules according to Claim 11.

According to a third aspect, the granules according to Claim 1 are used for incorporating in a glass batch according to Claim 13.

According to a fourth aspect, the invention provides a method for increasing the retention of the substance to be protected in a glass manufacturing process according to Claim 14.

According to a fifth aspect, the invention provides a soda lime glass according to Claim 15.

Dependent claims define further preferred embodiments of the invention.

According to the invention, granules are small pieces of material of any shape, having at least 0.5 cm in their largest dimension. Generally, they do not exceed 20 cm for that largest dimension. Preferably, agglomerated granules are of spherical, parallelepipedic, cubic or of cylindrical shape. Granules according to the invention are composed of a simple homogeneous mixture of a) at least one substance to be protected and b) a matrix, resulting in an agglomerate.

The granules according to the invention contains between 0.1 and 50% in weight of the substance to be protected and, generally, between 1 and 25%.

According to the invention, by simple homogeneous mixture, it is intended a physical solid-solid mixture of particles. In the simple homogeneous mixture according to the invention, the particles of the matrix and the particles of the substance to be protected are distributed randomly in the granule, each particle keeping their proper chemical properties. Generally present as a minor component in the granule, each particle of the substance to be protected is thus mainly surrounded by particles of the matrix, except for the particles located at the surface of the granule.

In order to allow a good agglomeration, the granule according to the invention need an average particle sizes ratio of matrix/substance to be protected which lies between 0.01 and 100 and, in a general way, between 0.05 and 20.

According to the invention, the at least one substance to be protected is a volatilizable compound.

According to the invention, the at least one substance to be protected is selected from carbonaceous materials and/or compounds of selenium, sulphur, tellurium, arsenic and antimony.

According to one preferred embodiment of the invention, the at least one substance to be protected is a carbonaceous compound selected from coke, graphite, charcoal or carbon black.

According to another preferred embodiment of the invention, the at least one substance to be protected is selected from metallic selenium, inorganic and organic salts, as well as other organic compounds comprising selenium in their molecule. In particular, the selenium compound may be selected from the selenites and the selenates. For example, it may be a selenite of an alkali metal, like a sodium selenite (Na₂SeO₃).

The matrix, according to the invention, is a substance that does not melt below 1300 °C under normal atmospheric pressure. The matrix must be able to protect for a time not longer than 5 to 15 minutes the at least one substance to be protected from hot molten glass batches components, like SiO₂, CaO, Na₂O, K₂O, Al₂O₃ and the like. The matrix must be free from any compound which could give rise to a gaseous compound when heated from atmospheric temperature up to 2000°C. It must as well be able to slowly form an eutectic product with at least one of the constituents of a batch of molten raw materials commonly used in a glass manufacturing process, when dipped into said molten glass raw materials batch. The eutectic product has a melting temperature of from 400 to 1800 °C under normal pressure.

The matrix according to the invention may comprise any inorganic or organic compound, possibly mixed together. According to the invention, the matrix may comprise at least one of the following compounds: SiO₂, Na₂O, K₂O, Li₂O, B₂O₃, CaO, MgO, BaO, ZnO, Al₂O₃, Fe₂O₃, Se, TiO₂, CoO, MnO, Cr₂O₃, CeO₂, ZrO₂, NiO, SnO₂, Cu₂O and V₂O₅. Those compounds may be present as such in the matrix, or mixed or combined with others in order to form special components like sand, cement of any type, calcined dolomite... and the like. Two or more of them may as well be mixed together.

According to an embodiment of the invention, the matrix is generally able to form an eutectic with one or more of molten CaO, MgO, Na₂O, SiO₂ or Al₂O₃ present in a raw material glass batch.

As mentioned above, a second aspect of the invention is to supply a process for the manufacture of granules. In that process:
a) a quantity of the matrix material is mixed with the at least one substance to be protected
b) the resulting mixture is poured into a mould and tamped into an agglomerate
c) the finished agglomerated granule is removed from the mold.

According to the invention, the mixture of the matrix material with the at least one substance to be protected may be obtained by using a blender, for example, a paddle blender, a rotating bucket blender or a rotating biconic blender.

According to an embodiment of the invention, a small proportion of a binding agent may be added to the mixture of the substance to be protected and the matrix. The said binding agent plays the role of allowing a better agglomeration of the granules. The binding agent may be a glue, for example a liquid silicate, an organic adhesive, and/or simply water. In a preferred way, the binding agent used is water.

The invention also relates to the use of the granules according to the invention for incorporating in a molten glass batch in order to reduce the volatilization phenomenon of the volatilizable substance incorporated in the said granules.

According to an embodiment of the invention, it relates to a method of reducing the loss of carbonaceous compound in a glass manufacturing process comprising carbon by incorporating at least part of the carbonaceous raw material inside granules compliant with the invention.

According to another interesting embodiment of the invention, it relates to a method of reducing volatilization phenomenon in a glass manufacturing process comprising selenium by incorporating at least part of the selenium raw material inside granules compliant with the invention.

A last aspect of the invention is to provide a glass, which has been manufactured by the method detailed above. In a preferred embodiment, the glass is a soda lime glass. In another preferred embodiment, the soda lime glass according to the invention is a float glass obtained by floating a ribbon of molten glass on the upper surface of a bath of molten metal tin. The glass may also be, alternatively, any other type of glass including, non-limitatively: cast glass, drawn glass and blown cylinder glass.

Preferably, the soda lime float glass is a flat glass.

The invention will now be illustrated below by examples aiming at better describing the invention, without by no mean trying to limit its scope.

### Example 1R (not in accordance with the invention) :

A first reference example has involved a carbon-containing glass batch of raw materials which does not comprise any particular protection means for carbon. The solid components have only been mixed in a solid pulverulent form in the composition indicated in Table 1.

**Table 1:**

| **Component** | **Amount, g** |
|---|---|
| Sand | 142.400 |
| Feldspar | 0.330 |
| Slag | 12.100 |
| Limestone | 1.640 |
| Dolomite | 36.200 |
| Soda Ash | 46.600 |
| Salt cake | 1.430 |
| Rouge | 0.560 |
| Coke | 0.037 |

To those components was added 4 % of the total weight of the batch of water in a liquid form in order to ease the mix of the different solid components. After dry mixing of the batch solids, they have been poured into a zirconia-alumina crucible, the latter being inserted for 2 hours into a laboratory furnace preheated to 1200 °C and filled with a reductive gaseous atmosphere consisting of a mixture of 95 % nitrogen and 5 % hydrogen. The molten batch, which was become a molten glass, has then been casted on a cold plate and the resulting solid glass broken in small pieces. The pieces have then been inserted again in a crucible and placed in the furnace at 1200 °C. The temperature was then increased up to 1450 °C at a rate of about 5 °C/min. The molten glass has thereafter been casted, broken and inserted again in the furnace at 1450 °C. The total duration of the stay at that temperature was about 2 hours. The temperature has thereafter been increased up to 1500 °C with the same rate of 5 °C/min. The molten glass was thereafter maintained at that temperature for refining during about one hour, followed by a return to 1450 °C for thermal conditioning during about 1.5 hours.

At the end of the thermal conditioning period, the molten glass has been casted in small 4 cm x 4 cm steel moulds, which were placed in an annealing furnace at 600 °C for 2.5 hours. The electric heating of the annealing furnace has thereafter been switched off and the temperature allowed going down to ambient overnight.

The day after, glass samples were withdrawn from the moulds and their faces mechanically polished. Their chemical composition were thereafter analysed by the X-ray fluorescence technique and their remaining selenium yield computed by comparison with the amount initially added in the batch mixture.

The retention of coke in the glass can be indirectly quantified via the LOF value, which is the ratio between the amount of ferrous iron and the total iron content and which classically gives the redox character of glass. This LOF value for example 1R has reached 31%.

### Example 2 (according to the invention) :

In this example, agglomerated granules compliant to the invention have been used as a source of carbon in the glass batch. Table 2 gives the compositions of the raw batch and of the granule.

**Table 2 :**

| **Glass batch** | |
|---|---|
| **component** | **amount, g** |
| Sand | 142.400 |
| Feldspar | 0.330 |
| Slag | 12.100 |
| Limestone | 1.640 |
| Dolomite | 36.200 |
| Soda Ash | 46.600 |
| Salt cake | 1.430 |
| Rouge | 0.560 |

| **Granule** | |
|---|---|
| **component** | **amount, g** |
| Clinker | 4.963 |
| coke | 0.037 |

The same procedure of melting, refining and annealing the glass has been performed as in example 1R.

The LOF value has been, for this example, 39%. This value has thus been significantly increased by using granules according to the invention in comparison with the example using no protection mean for coke (example 1R).

### Example 3R (not in accordance with the invention) :

A second reference example has involved a selenium-containing batch of raw materials which does not comprise any particular protection means for selenium. The following solid components have been mixed in a solid pulverulent form in the composition indicated in Table 3.

**Table 3:**

| **Component** | **Amount, g** |
|---|---|
| Sand | 139.117 |
| Feldspar | 4.744 |
| Slag | 2.116 |
| Limestone | 7.629 |
| Dolomite | 39.812 |
| Soda Ash | 42.889 |
| Salt cake | 1.763 |
| Niter | 1.539 |
| Rouge | 0.480 |
| CoSO₄.7H₂O | 0.030 |
| Na₂SeO₃ | 0.059 |

The same procedure of melting, refining and annealing the glass has been performed as in example 1R.

The measured Se yield has been, for this example, 14 %.

### Example 4R (not in accordance with the invention) :

A third reference example has involved a selenium-containing batch of raw materials using an encapsulated selenium pellet manufactured as described in W02007/045654A1. Table 4 indicates the composition of the glass batch as well as the amounts of matrix and selenium compound in the encapsulated pellet.

**Table 4:**

| **Glass batch** | |
|---|---|
| **component** | **amount, g** |
| Sand | 139.500 |
| Feldspar | 4.740 |
| Slag | 2.116 |
| Limestone | 7.629 |
| Dolomite | 39.812 |
| Soda Ash | 42.889 |
| Salt cake | 1.763 |
| Niter | 1.539 |
| Rouge | 0.471 |
| CoSO₄.7H₂O | 0.030 |

| **Encapsulated pellet** | |
|---|---|
| **component** | **amount, g** |
| Clinker | 4.963 |
| Na₂SeO₃ | 0.059 |

The same procedure of melting, refining and annealing the glass has been performed as in example 1R.

The selenium yield computation gave a result of 24 %.

### Example 5 (according to the invention) :

This example has involved a selenium-containing batch of raw materials using agglomerated granules compliant to the invention. Table 5 gives the compositions of the raw batch and the granule.

**Table 5:**

| **Glass batch** | |
|---|---|
| **component** | **amount, g** |
| Sand | 139.500 |
| Feldspar | 4.740 |
| Slag | 2.116 |
| Limestone | 7.629 |
| Dolomite | 39.812 |
| Soda Ash | 42.889 |
| Salt cake | 1.763 |
| Niter | 1.539 |
| Rouge | 0.471 |
| CoSO₄.7H₂O | 0.030 |

| **Granule** | |
|---|---|
| **component** | **amount, g** |
| Clinker | 4.963 |
| Na₂SeO₃ | 0.059 |

The same procedure of melting, refining and annealing the glass has been performed as in example 1R.

The selenium yield has been computed and has reached 39%. It can be seen with this example that simply mixing the selenium compound with the matrix in an agglomerated granule can increase significantly the selenium retention compared to the reference without any protection means for selenium (example 3R) but also compared to the reference implementing encapsulated pellets (example 4R).

## Claims

1. Granules of at least 0.5 cm in their largest dimension comprising at least one substance to be protected and a matrix which a) has a melting temperature lower than 1300 °C under normal pressure, b) is free from any compound which could give rise to a gaseous compound when heated from atmospheric temperature up to 2000 °C and c) when dipped into a molten batch of raw materials commonly used in a glass manufacturing process, is able to form an eutectic product with at least one of the constituents of the batch, the eutectic product having a melting temperature of from 400 to 1800 °C under normal pressure, **characterised in that** the granules are made of a simple homogeneous mixture of the matrix and the at least one substance to be protected, resulting in an agglomerate.

2. Granules according to Claim 1, **characterised in that** it contains between 0.1 and 50% in weight of the substance to be protected.

3. Granules according to Claim 1 or 2, **characterised in that** the at least one substance to be protected is a volatilizable compound.

4. Granules according to Claim 1 or 2, **characterised in that** the at least one substance to be protected is a carbonaceous material selected from coke, graphite, charcoal or carbon black.

5. Granules according to Claim 1 or 2, **characterised in that** the at least one substance to be protected is a selenium compound.

6. Granules according to Claim 5, **characterised in that** the selenium compound is selected from metallic selenium and inorganic and organic salts as well as other organic compounds comprising selenium in their molecule.

7. Granules according to Claim 6, **characterised in that** the selenium compound is selected from the selenites and the selenates

8. Granules according to any one of claims 1 to 7, **characterised in that** the matrix comprises at least one of the following compounds: SiO₂, Na₂O, K₂O, Li₂O, B₂O₃, CaO, MgO, BaO, ZnO, Al₂O₃, Fe₂O₃, Se, TiO₂, CoO, MnO, Cr₂O₃, CeO₂, ZrO₂, NiO, SnO₂, Cu₂O and V₂O₅.

9. Granules according to claim 8, **characterised in that** the matrix comprises at least sand, cement, calcined dolomite or any combination of two or more of those compounds.

10. Granules according to any one of claims 1 to 9, **characterised in that** the matrix is able to form an eutectic with one or more of molten CaO, MgO and SiO₂ present in a raw material glass batch.

11. Process for the manufacture of granules according to any one of claims 1 to 10, **characterised in that:**
a) a quantity of the matrix material is mixed with the at least one substance to be protected
b) the resulting mixture is poured into a mould and tamped into an agglomerate
c) the finished agglomerated granule is removed from the mold.

12. Process for the manufacture of granules according to Claim 11, **characterised in that** a small proportion of a binding agent is added to the mixture.

13. Use of the granules according to any one of claims 1 to 12 for incorporating in a glass batch in order to increase the retention of the substance to be protected enclosed in the granules.

14. A method for increasing the retention of the substance to be protected in a glass manufacturing process by incorporating at least part of the said volatilizable compound inside the granules according to any one of claims 1 to 13.

15. A soda lime glass, which has been manufactured by the method of Claim 14.

16. Soda lime glass according to Claim 15, **characterised in that** it is a float glass obtained by floating a ribbon of molten glass on the upper surface of a bath of molten metal tin.

17. A flat glass, **characterised in that** it is the float glass of claim 16.
